# EUROPEAN PATENT APPLICATION

(11) **EP 2 752 329 A1**
(43) Date of publication of application: **09.07.2014**
(21) Application number: 11840700.6
(22) Date of filing: 30.08.2011
(51) Int. Cl.: B60L 8/00, B60L 1/00, B60L 11/18, H02J 7/00, H02J 7/35

(54) **POWER SUPPLY SYSTEM FOR VEHICLE**

(71) Applicant: TOYOTA JIDOSHA KABUSHIKI KAISHA, Toyota-shi, Aichi-ken, 471-8571 (JP)
(72) Inventor: ANG, Wanleng, Toyota-shi Aichi 471-8571 (JP)
(74) Representative: Smith, Samuel Leonard
(86) International application number: PCT/JP2011/069527
(87) International publication number: WO 2013/030941

(57) **Abstract**

A power supply system for a vehicle includes: a first power storage device (MB); a second power storage device (5); a voltage converter (6) performing voltage conversion between a first node (N1P) and a second node (N2P); a first switching unit (32) capable of connecting the first node to any one of the first power storage device and a third node (N3P); and a second switching unit (34) capable of connecting the second node to any one of the second power storage device and the third node. To the third node, a power supply device (9) is connected. Preferably, the power supply device includes a solar cell mounted on the vehicle.

## Description

### TECHNICAL FIELD

The present invention relates to a power supply system for a vehicle, and particularly to a power supply system for a vehicle on which a plurality of power storage devices are mounted.

### BACKGROUND ART

In recent years, it has been studied to use electric power generated by a solar cell also in vehicles. Japanese Patent Laying-Open No. 8-19193 (PTL 1) discloses a technology through which a photovoltaic power generation system is popularized and promoted widely to a general household and installed simply at low costs.

The photovoltaic power generation system described in this document includes a solar cell module which is laid on a roof part of a carport and in which a number of solar cells are arranged side by side being connected to each other, a household power conditioner which is connected to the solar cell module and converts DC generated electric power from the solar cell module into AC electric power to supply it to a load inside a household, and a battery charger which converts AC electric power from the power conditioner again into DC electric power to store it in a battery for a gasoline vehicle or an electric vehicle or which converts the stored electric power into AC electric power to supply it to the load inside the household.

### CITATION LIST

### PATENT LITERATURE

PTL 1: Japanese Patent Laying-Open No. 8-19193
PTL 2: Japanese Patent Laying-Open No. 2009-225587
PTL 3: Japanese Patent Laying-Open No. 2007-228753

### SUMMARY OF INVENTION

### TECHNICAL PROBLEM

However, the above-described photovoltaic power generation system disclosed in Japanese Patent Laying-Open No. 8-19193 needs to be provided with a dedicated power conditioner which converts DC electric power generated at the solar cell module.

Further, when it is desired that electric power generated by the solar cell module be converted and charge a plurality of power storage devices, providing a plurality of voltage converters results in a high parts count and increased manufacturing costs.

An object of the present invention is to provide a power supply system for a vehicle which enables a power supply such as a solar cell to charge a power storage device while suppressing an increase in parts count.

### SOLUTION TO PROBLEM

The present invention is summarized as a power supply system for a vehicle which includes: a first power storage device; a second power storage device; a voltage converter performing voltage conversion between a first node and a second node; a first switching unit capable of connecting the first node to any one of the first power storage device and a third node; and a second switching unit capable of connecting the second node to any one of the second power storage device and the third node. A power supply device is connected to the third node.

Preferably, the power supply system further includes a control device controlling the first switching unit, the second switching unit, and the voltage converter. The control device has modes of operation of first to third modes of operation. In the first mode of operation, the control device controls the first switching unit to connect the first power storage device and the first node together, controls the second switching unit to connect the second power storage device and the second node together, and causes the voltage converter to perform voltage conversion between the first power storage device and the second power storage device. In the second mode of operation, the control devices controls the first switching unit to connect the first power storage device and the first node together, controls the second switching unit to connect the third node and the second node together, and causes the voltage converter to perform voltage conversion between the first power storage device and the power supply device. In the third mode of operation, the control device controls the first switching unit to connect the third node and the first node together, controls the second switching unit to connect the second power storage device and the second node together, and causes the voltage converter to perform voltage conversion between the second power storage device and the power supply device.

More preferably, the power supply device includes a solar cell mounted on the vehicle.

Further preferably, the control device selects the third mode of operation when the solar cell can generate electric power and the second power storage device is in need of charging.

More preferably, the control device selects the second mode of operation when the solar cell can generate electric power, the second power storage device is in no need of charging, and the first power storage device can be charged.

More preferably, the control device selects the first mode of operation when the solar cell cannot generate electric power.

Preferably, the power supply system for a vehicle further includes a motor receiving electric power from the first power storage device to generate motive power for propelling the vehicle.

In other aspect, the present invention is a vehicle including the power supply system for a vehicle according to any one of the items above.

### ADVANTAGEOUS EFFECTS OF INVENTION

The present invention enables a power supply such as a solar cell to charge a power storage device while suppressing an increase in parts count.

### BRIEF DESCRIPTION OF DRAWINGS

Fig. 1 is a circuit diagram showing a configuration of a vehicle 1 on which a power supply system for a vehicle according to a first embodiment is mounted.
Fig. 2 illustrates switching of connections of a DC/DC converter 6.
Fig. 3 is a flowchart illustrating a process through which a control device 30 shown in Figs. 1 and 2 controls switching units 32, 34.
Fig. 4 illustrates in which direction electric power moves for the cases where DC/DC converter 6 serves three applications.
Fig. 5 is a circuit diagram showing a configuration of a vehicle 1A on which a power supply system for a vehicle according to a second embodiment is mounted.

### DESCRIPTION OF EMBODIMENTS

Embodiments of the present invention will be hereinafter described in detail with reference to the drawings. It is noted that in the drawings, the same or corresponding portions have the same reference signs allotted, and a description thereof will not be repeated.

### First Embodiment

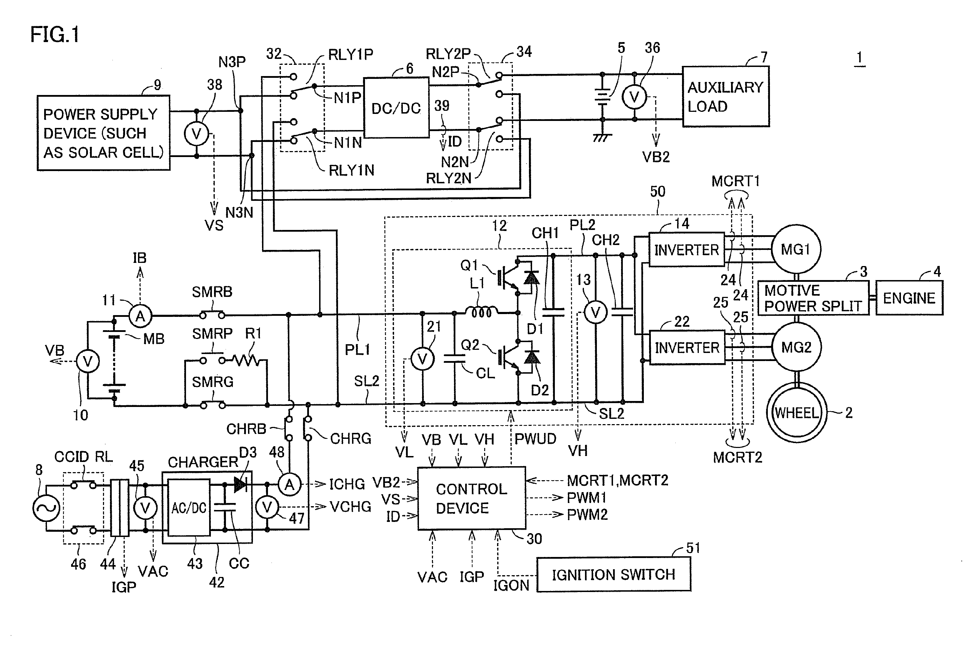

Fig. 1 is a circuit diagram showing a configuration of a vehicle 1 on which a power supply system for a vehicle according to a first embodiment is mounted.

Referring to Fig. 1, vehicle 1 includes a power control unit (PCU) 50, an engine 4, motor-generators MG1, MG2, a motive power split device 3, a wheel 2, an ignition switch 51, and a control device 30.

Vehicle 1 further includes a main battery MB serving as a power storage device, a voltage sensor 10, a current sensor 11, system main relays SMRB, SMRG, SMRP, a resistance R1, and relays for charging CHRB, CHRG.

PCU 50 includes a voltage converter 12, a smoothing capacitor CH2, a voltage sensor 13, and inverters 14, 22.

Voltage converter 12 includes a voltage sensor 21, a reactor L1 having one end connected to a positive electrode bus PL1, IGBT elements Q1, Q2 connected in series between a positive electrode bus PL2 and a negative electrode bus SL2, diodes D1, D2 connected in parallel with IGBT elements Q1, Q2, respectively, and capacitors CL, CH1.

Reactor L1 has the other end connected to the emitter of IGBT element Q1 and the collector of IGBT element Q2. Diode D1 has a cathode connected to the collector of IGBT element Q1, and diode D1 has an anode connected to the emitter of IGBT element Q1. Diode D2 has a cathode connected to the collector of IGBT element Q2, and diode D2 has an anode connected to the emitter of IGBT element Q2.

Voltage converter 12 is provided with a control signal PWUD from control device 30. IGBT elements Q1, Q2 are under on/off control based on control signal PWUD.

Smoothing capacitor CL is connected between positive electrode bus PL1 and negative electrode bus SL2. Voltage sensor 21 detects a voltage VL across smoothing capacitor CL and outputs the detected voltage to control device 30. Voltage converter 12 boosts a voltage across smoothing capacitor CL.

Smoothing capacitors CH1, CH2 smooth a voltage boosted by voltage converter 12. Voltage sensor 13 detects a voltage VH across smoothing capacitor CH2 and outputs the detected voltage to control device 30.

Inverter 14 converts a DC voltage provided from voltage converter 12 into a three-phase AC voltage and outputs it to motor-generator MG 1. Inverter 22 converts a DC voltage provided from voltage converter 12 into a three-phase AC voltage and outputs it to motor-generator MG2.

Motive power split device 3 is a mechanism which is coupled to engine 4 and motor-generators MG1, MG2 to distribute motive power among them. For instance, a motive power split device can be implemented by a planetary gear mechanism having three rotation shafts of a sun gear, a planetary carrier, a ring gear.

In the planetary gear mechanism, when two of the three rotation shafts have their rotation determined, the rotation of the remaining one shaft is determined in a forced manner. These three rotation shafts are connected to rotation shafts of engine 4, motor-generators MG1, MG2, respectively. It is noted that the rotation shaft of motor-generator MG2 is coupled to wheel 2 by a reduction gear and a differential gear, which are not shown in the drawings. In addition, a speed reducer for the rotation shaft of motor-generator MG2 may be further incorporated within motive power split device 3.

In response to actuation of ignition switch 51, control device 30 sets the vehicle to a travelable state. Ignition switch 51 may be a turn-key switch or a push-button switch. At this time, system main relays SMRB, SMRG, SMRP have their conducting/non-conducting states controlled in response to control signals provided by control device 30, respectively.

First, system main relays SMRB, SMRP pre-charges capacitor CL with resistance R1 interposed, and subsequently, system main relays SMRB, SMRG makes a change in connection such that current is supplied from main battery MB to the load.

It is noted that even without actuation of ignition switch 51, system main relays are connected under the same procedure prior to the start of charging when a charging cable is connected to a connector 44 and external charging is carried out.

Voltage sensor 10 measures a voltage VB across main battery MB. Current sensor 11 measures current IB flowing through battery MB so as to, together with voltage sensor 10, monitor a state of charge of battery MB. Battery MB can be implemented by, for example, a secondary battery such as a lead storage battery, a nickel-metal hydride battery, and a lithium-ion battery and a high-capacitance capacitor such as an electric double layer capacitor.

Negative electrode bus SL2 having one end connected to system main relay SMRG extends through voltage converter 12 to inverters 14 and 22.

Inverter 14 is connected to positive electrode bus PL2 and negative electrode bus SL2. Receiving a boosted voltage from voltage converter 12, inverter 14 drives motor-generator MG1, for example, so as to start engine 4. Inverter 14 also returns, to voltage converter 12, electric power which is generated at motor-generator MG1 with motive power transferred from engine 4. At this time, control device 30 controls voltage converter 12 such that it operates as a step-down circuit.

A current sensor 24 detects current flowing through motor-generator MG1 as a motor current value MCRT1 and outputs motor current value MCRT1 to control device 30.

Inverter 22 is connected in parallel with inverter 14 to positive electrode bus PL2 and negative electrode bus SL2. Inverter 22 converts a DC voltage output by voltage converter 12 into a three-phase AC voltage and outputs it to motor-generator MG2 which drives wheel 2. With regenerative braking, inverter 22 also returns electric power which is generated in motor-generator MG2, to voltage converter 12. At this time, control device 30 controls voltage converter 12 such that it operates as a step-down circuit.

A current sensor 25 detects current flowing through motor-generator MG2 as a motor current value MCRT2 and outputs motor current value MCRT2 to control device 30.

Control device 30 receives torque command values and rotation speed of motor-generators MG1, MG2, values of voltages VB, VL, VH, motor current values MCRT1, MCRT2, an ignition signal IGON, and a plug-in notification signal IGP. Control device 30 then outputs control signal PWUD which gives a boost instruction and a step-down instruction to voltage converter 12.

Further, control device 30 controls inverter 14 by means of a control signal PWM1. Based on control signal PWM1, inverter 14 converts a DC voltage output by voltage converter 12 into an AC voltage for driving motor-generator MG1, or converts an AC voltage generated at motor-generator MG1 into a DC voltage to perform regeneration which returns the DC voltage toward voltage converter 12.

Similarly, control device 30 controls inverter 22 by means of a control signal PWM2. Based on control signal PWM2, inverter 22 converts a DC voltage output by voltage converter 12 into an AC voltage for driving motor-generator MG2, or converts an AC voltage generated at motor-generator MG2 into a DC voltage to perform regeneration which returns the DC voltage toward voltage converter 12.

Vehicle 1 further includes a charger 42 for externally charging main battery MB, voltage sensors 45, 47, a current sensor 48, and connector 44. Connector 44 is connected to a commercial power supply 8 via a CCID (Charging Circuit Interrupt Device) relay 46. Commercial power supply 8 is, for example, an AC 100V power supply installed external to the vehicle.

Charger 42 performs AC-to-DC conversion and a voltage adjustment to provide the adjusted voltage for main battery MB. It is noted that external charging may be made possible employing other systems, including a system where neutral points of stator coils of motor-generators MG1, MG2 are connected to an AC power supply and a system where a plurality of voltage converters 12 are included and the plurality of voltage converters are combined together to function as an AC/DC converting device.

Voltage sensor 45 detects a voltage VAC externally provided for connector 44. Connector 44 outputs plug-in notification signal IGP which indicates whether or not a power supply cable is externally connected. Voltage sensor 47 detects a voltage VCHG output by charger 42. Current sensor 48 detects voltage VCHG output from charger 42.

Charger 42 includes a conversion unit 43 which converts alternating current from commercial power supply 8 into direct current, a capacitor CC, and a backflow preventing diode D3. Conversion unit 43 includes a first rectifier circuit which first rectifies externally input AC 100V to direct current, a circuit which subsequently converts the direct current into alternating current of high frequency, an insulating transformer, and a second rectifier circuit. The insulating transformer has a primary side which is provided with alternating current of high frequency. The insulating transformer has a secondary side which outputs a boosted AC voltage. Subsequently, the AC voltage is rectified again by the second rectifier circuit and supplied to main battery MB.

Vehicle 1 further includes a DC/DC converter 6, switching units 32, 34 which make a switch between connections, a power supply device 9, an auxiliary battery 5, an auxiliary load 7, a voltage sensor 30, and a current sensor 39. Power supply device 9 includes, for example, a generator such as a solar cell installed on a roof portion of a vehicle and a wind power generator installed at a portion of a vehicle where wind hits while the vehicle is traveling.

Auxiliary load 7 includes, for example, a monitor for displaying a variety of information, a car navigation device, a heater, a blower, and the like.

In the present embodiment, DC/DC converter 6 serves three applications. A first application is for voltage conversion between main battery MB and auxiliary battery 5. A second application is for voltage conversion between power supply device 9 such as a solar cell and main battery MB. A third application is for voltage conversion between power supply device 9 such as a solar cell and auxiliary battery 5.

It should be noted that DC/DC converter 6 is capable of performing voltage conversion between only two nodes, and therefore, switching units 32, 34 make a switch between connections to enable DC/DC converter 6 to serve the three applications above.

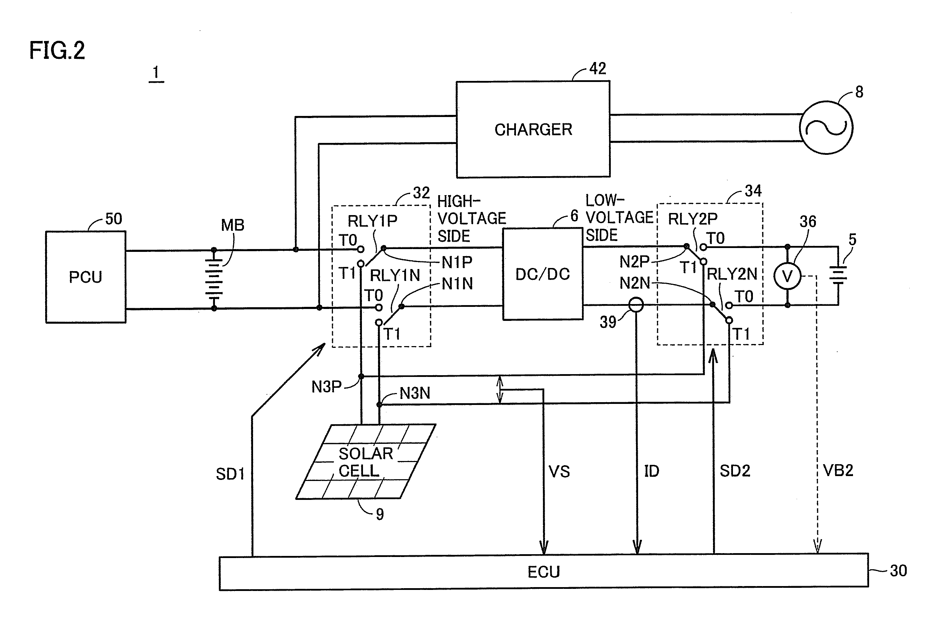

Fig. 2 illustrates switching of connections of DC/DC converter 6. For ease of understanding, Fig. 2 shows only part of vehicle 1 relevant to where DC/DC converter 6 is connected to.

Referring to Fig. 2, switching unit 32 includes a relay RLY1P and a relay RLY1N. Relay RLY1P selectively connects a positive-electrode node N1P on the high-voltage side of DC/DC converter 6 either to a terminal T0 or to a terminal T1. Terminal T0 of relay RLY1P is connected to the positive electrode of main battery MB, and terminal T1 of relay RLY1P is connected to a positive electrode node N3P of power supply device 9. Relay RLY1N selectively connects a negative-electrode node N1N on the high-voltage side of DC/DC converter 6 either to a terminal T0 or to a terminal T1. Terminal T0 of relay RLY1N is connected to the negative electrode of main battery MB, and terminal T1 of relay RLY1N is connected to a negative electrode node N3N of power supply device 9 such as a solar cell.

Switching unit 34 includes a relay RLY2P and a relay RLY2N. Relay RLY2P selectively connects a positive-electrode node N2P on the low-voltage side of DC/DC converter 6 either to a terminal T0 or to a terminal T1. Terminal T0 of relay RLY2P is connected to the positive electrode of auxiliary battery 5 and terminal T1 of relay RLY2P is connected to positive electrode node N3P of power supply device 9. Relay RLY2N selectively connects a negative-electrode node N2N on the low-voltage side of DC/DC converter 6 either to a terminal T0 or to a terminal T1. Terminal T0 of relay RLY2N is connected to the negative electrode of auxiliary battery 5, and terminal T1 of relay RLY2N is connected to negative electrode node N3N of power supply device 9 such as a solar cell.

Control device (ECU) 30 outputs, to switching units 32, 34, control signals SD1, SD2 which control switching based on output voltage VS of power supply device 9, current ID from current sensor 39, and a voltage VB2 from a voltage sensor 36.

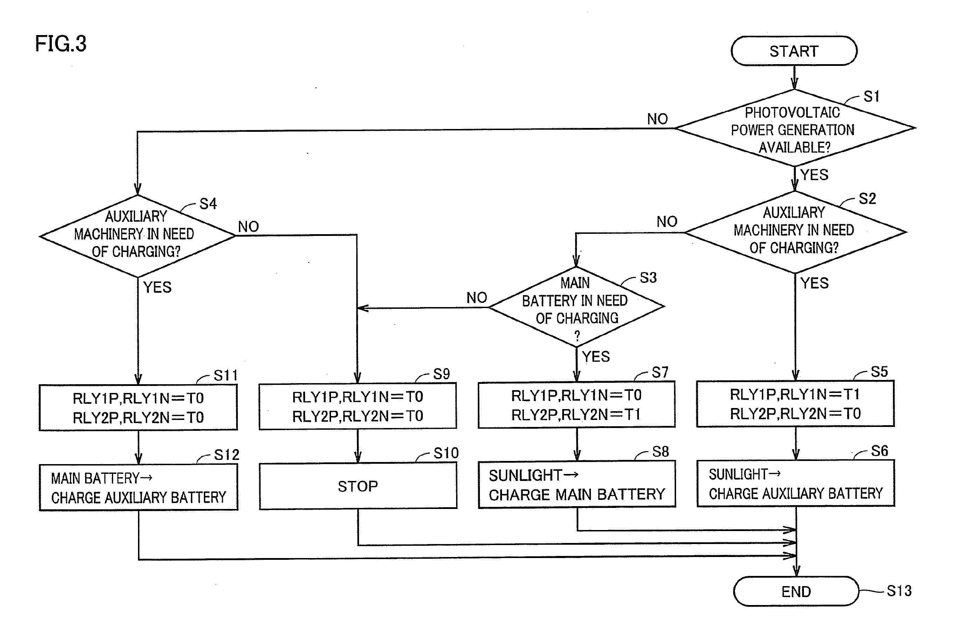

Fig. 3 is a flowchart illustrating a process through which control device 30 shown in Figs. 1 and 2 controls switching units 32, 34.

Referring to Figs. 2 and 3, when the process is started, first, in step S1, control device 30 determines whether or not power supply device 9 can output electric power. For instance, in the case where power supply device 9 is a solar cell, if there is any insolation into the solar cell, then voltage VS increases, and therefore, whether or not power supply device 9 can output electric power can be determined based on whether or not voltage VS exceeds a threshold value. It is noted that also in the case where power supply device 9 is implemented by a wind power generator or the like, if a wind turbine rotates catching wind, then voltage VS increases, and therefore, the determination can be made in the same manner.

If it is determined in step S1 that it is possible to output electric power (power generation is available), then the process proceeds to step S2. In step S2, control device 30 determines whether or not auxiliary battery 5 is in need of charging. Control device 30 obtains voltage VB2 of auxiliary battery 5 from voltage sensor 36, determines that there is no need for charging if voltage VB2 is equal to or more than a predetermined threshold value, and determines that there is a need for charging if voltage VB2 is lower than the predetermined threshold value.

If it is determined in step S2 that auxiliary battery 5 is in need of charging, then the process proceeds to step S5, and if it is determined that auxiliary battery 5 is not in need of charging, then the process proceeds to step S3.

In step S5, control device 30 uses control signals SD1, SD2 to set switching units 32, 34. At this time, at relay RLY1P and relay RLY1N, terminals T1 are selected as subjects to be connected, and at relay RLY2P and relay RLY2N, terminals T0 are selected as subjects to be connected. Setting switching units 32, 34 in such manner establishes a connection between power supply device 9 and the high-voltage side of DC/DC converter 6 and a connection between auxiliary battery 5 and the low-voltage side of DC/DC converter 6.

Upon completion of setting switching units 32, 34 in step S5, in step S6, control device 30 controls DC/DC converter 6 such that electric power from power supply device 9 (for example, a solar cell) charges auxiliary battery 5. For instance, when a voltage of approximately 100 V is generated at the solar cell, DC/DC converter 6 steps down this voltage to a voltage of approximately 14 V to charge auxiliary battery 5.

On the other hand, when the process proceeds from step S2 to step S3, in step S3, control device 30 determines whether or not main battery MB is in need of charging. For instance, control device 30 receives a State Of Charge (SOC, also referred to as remaining capacitance, amount of charge, and the like) of main battery MB from a monitoring unit (not shown) which monitors main battery MB, and determines whether or not there is a need for charging based on whether or not the SOC (%) is lower than a threshold value. It is noted that the SOC is calculated or estimated in the monitoring unit by a publicly known method based on the voltage and current of the main battery.

If it is determined in step S3 that main battery MB is in need of charging, then the process proceeds to step S7, and if it is determined that main battery MB is not in need of charging, then the process proceeds to step S9.

In step S7, control device 30 uses control signals SD1, SD2 to set switching units 32, 34. At this time, at relay RLY1P and relay RLY1N, terminals T0 are selected as subjects to be connected, at relay RLY2P and relay RLY2N, terminals T1 are selected as subjects to be connected. Setting switching units 32, 34 in such manner establishes a connection between main battery MB and the high-voltage side of DC/DC converter 6 and a connection between power supply device 9 and the low-voltage side of DC/DC converter 6.

Upon completion of setting switching units 32, 34 in step S7, in step S8, control device 30 controls DC/DC converter 6 such that electric power from power supply device 9 (for example, a solar cell) charges main battery MB. For instance, when a voltage of approximately 100 V is generated at the solar cell, DC/DC converter 6 boosts this voltage to a voltage of approximately 200 V to charge main battery MB.

If it is determined in step S 1 that it is not possible to output electric power from power supply device 9 (photovoltaic power generation is unavailable), then the process proceeds to step S4.

In step S4, control device 30 determines whether or not auxiliary battery 5 is in need of charging. Control device 30 obtains voltage VB2 of auxiliary battery 5 from voltage sensor 36, determines that there is no need of charging if voltage VB2 is equal to or more than a predetermined threshold value, and determines that there is a need for charging if voltage VB2 is lower than the predetermined threshold value.

If it is determined in step S4 that auxiliary battery 5 is in need of charging, then the process proceeds to step S11, and if it is determined that auxiliary battery 5 is not in need of charging, then the process proceeds to step S9.

In step S11, control device 30 uses control signals SD1, SD2 to set switching units 32, 34. At this time, at relay RLY1P and relay RLY1N, terminals T0 are selected as subjects to be connected, and at relay RLY2P and relay RLY2N, terminals T0 are selected as subjects to be connected. Setting switching units 32, 34 in such manner establishes a connection between main battery MB and the high-voltage side of DC/DC converter 6 and a connection between auxiliary battery 5 and the low-voltage side of DC/DC converter 6.

Upon completion of setting switching units 32, 34 in step S11, in step S12, control device 30 controls DC/DC converter 6 such that electric power from main battery MB charges auxiliary battery 5. For instance, when a main battery MB has a voltage of approximately 200V, DC/DC converter 6 steps down this voltage to a voltage of approximately 14 V to charge auxiliary battery 5.

Finally, if it is determined in step S3 that main battery MB is not in need of charging or if it is determined in step S4 that auxiliary battery 5 is not in need of charging, then the process proceeds to step S9.

In step S9, control device 30 uses control signals SD1, SD2 to set switching units 32, 34. At this time, at relay RLY1P and relay RLY1N, terminals T0 are selected as subjects to be connected, and at relay RLY2P and relay RLY2N, terminals T0 are selected as subjects to be connected. Setting switching units 32, 34 in such manner establishes a connection between main battery MB and the high-voltage side of DC/DC converter 6 and a connection between auxiliary battery 5 and the low-voltage side of DC/DC converter 6.

Upon completion of setting switching units 32, 34 in step S9, in step S10, control device 30 stops operation of DC/DC converter 6.

As above, when the process of any one of steps S6, S8, S10, and S12 ends, a charging process ends in step S 13.

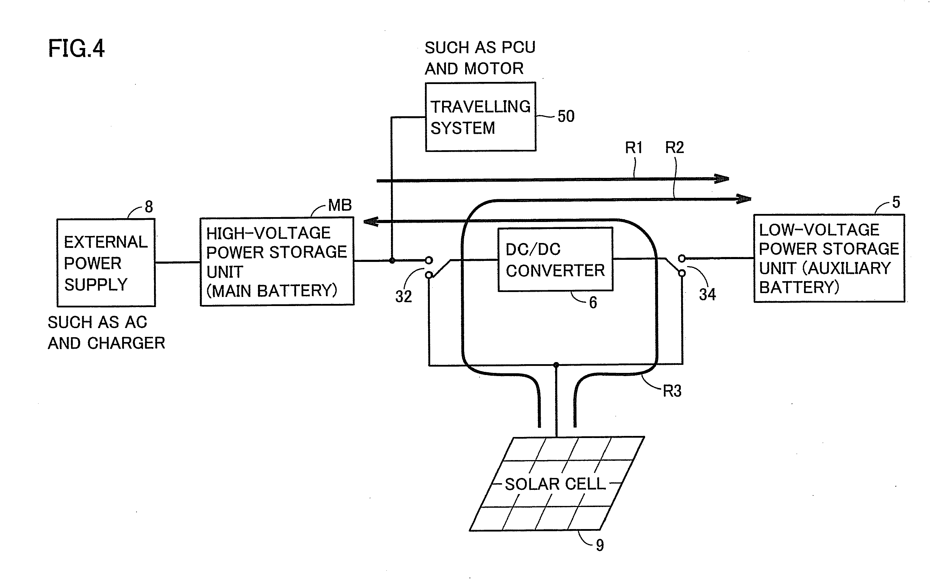

Fig. 4 illustrates in which direction electric power moves for the cases where DC/DC converter 6 serves three applications.

Referring to Figs. 3 and 4, when the processes of steps S11 and S12 are carried out, electric power moves along a route indicated by an arrow R1. When the processes of steps S5, S6 are carried out, electric power moves along a route indicated by an arrow R2. When the processes of steps S7, S8 are carried out, electric power moves along a route indicated by an arrow R3.

As shown in Fig. 4, an input or output unit of DC/DC converter 6 located between a high-voltage power storage unit (main battery MB) and a low-voltage power storage unit (auxiliary battery 5) is opened in response to the state of the vehicle (for example, the SOC of the power storage units and an amount of insolation), and the open side is connected to a solar cell or the like (power supply device 9).

In this way, without adding a dedicated DC/DC converter to power supply device 9 (such as a solar cell), charging the auxiliary battery with power supply device 9 and charging the main battery with power supply device 9 can be both realized.

### Second Embodiment

Although the first embodiment illustrated a case where there is one DC/DC converter, a charger may have a DC/DC converter built therein. In such a case, the same charging can be realized by changing points to be connected, without much extending a voltage adjustable range of the DC/DC converter.

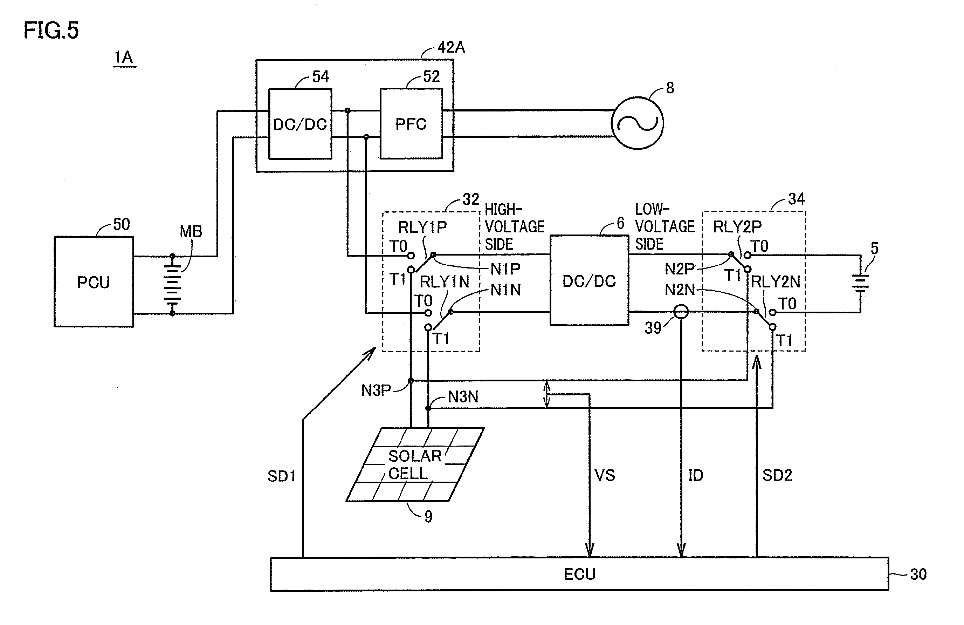

Fig. 5 is a circuit diagram showing a configuration of a vehicle 1A on which a power supply system for a vehicle according to a second embodiment is mounted.

Referring to Fig. 5, vehicle 1A includes a charger 42A instead of charger 42 in the configuration of vehicle 1 shown in Fig. 2. Charger 42A includes a Power Factor Correction (PFC) circuit 52 and a DC/DC converter 54.

PFC circuit 52 improves a voltage provided from commercial power supply 8 in power factor and converts the voltage into direct current. DC/DC converter 54 converts an output from power factor correction circuit 52 into a voltage for charging main battery MB.

In Fig. 2, switching unit 32 has terminals T0 directly connected to main battery MB; however, in Fig. 5, switching unit 32 has terminals T0 connected to an output of the PFC circuit.

It is noted that other portions in Fig. 5 have the same configurations as those in Fig. 2, and therefore, a description thereof will not be repeated here. In this way, even in the case where two DC/DC converters are provided, making a switch between connections on the both sides of DC/DC converter 6 with switching units 32, 34 enables DC/DC converter 6 to serve three applications.

Further, in charging main battery MB using power supply device (solar cell) 9, when the solar cell has a low output voltage, a first stage boosting (for example, boost a voltage from 50 V to 100 V) is performed with DC/DC converter 6, and a second boosting (for example, boost a voltage from 100 V to 200 V) is performed with DC/DC converter 54, and therefore, it is made possible to accommodate DC/DC converter 6 having a narrower voltage adjustable range than that in the first embodiment.

There are various other possible modifications. For instance, in Fig. 2, a further DC/DC converter may be added between power supply device 9 and nodes N3P, N3N. In addition, a configuration in which only any one of switching units 32, 34 is switchable and the other is not connected to power supply device 9 also enables DC/DC converter 6 to serve two applications.

It should be understood that the embodiments disclosed herein are illustrative and non-restrictive in every respect. The scope of the present invention is defined by the terms of the claims rather than the above description, and is intended to include any modifications within the scope and meaning equivalent to the terms of the claims.

### REFERENCE SIGNS LIST

1, 1A vehicle; 2 wheel; 3 motive power split device; 4 engine; 5 auxiliary battery; 6, 54 DC/DC converter; 7 auxiliary load; 8 commercial power supply; 9 power supply device; 10, 13, 21, 30, 36, 45, 47 voltage sensor; 11, 24, 25, 39, 48 current sensor; 12 voltage converter; 14, 22 inverter; 30 control device; 32, 34 switching unit; 42, 42A charger; 43 AC/DC conversion unit; 44 connector; 46, RLY1P, RLY1N, RLY2N, RLY2P relay; 51 ignition switch; 52 PFC circuit; CH1, CH2, CL smoothing capacitor; CHRB, CHRG relay for charging; D1, D2, D3 diode; L1 reactor; MG1, MG2 motor-generator; N1P, N2P, N3P positive electrode node; N1N, N2N, N3N negative electrode node; PL1, PL2 positive electrode bus; Q1, Q2 IGBT element; R1 resistance; SL2 negative electrode bus; SMRB, SMRP, SMRG system main relay.

## Claims

1. A power supply system for a vehicle, comprising:
a first power storage device (MB);
a second power storage device(5);
a voltage converter (6) performing voltage conversion between a first node (N1P) and a second node (N2P);
a first switching unit (32) capable of connecting said first node to any one of said first power storage device and a third node (N3P); and
a second switching unit (34) capable of connecting said second node to any one of said second power storage device and said third node,
a power supply device (9) being connected to said third node.

2. The power supply system for a vehicle according to claim 1, further comprising a control device (30) controlling said first switching unit, said second switching unit, and said voltage converter, wherein
said control device has modes of operation of first to third modes of operation,
in said first mode of operation, said control device controls said first switching unit to connect said first power storage device and said first node together, controls said second switching unit to connect second power storage device and said second node together, and causes said voltage converter to perform voltage conversion between said first power storage device and said second power storage device,
in said second mode of operation, said control devices controls said first switching unit to connect said first power storage device and said first node together, controls said second switching unit to connect said third node and said second node together, and causes said voltage converter to perform voltage conversion between said first power storage device and said power supply device, and
in said third mode of operation, said control device controls said first switching unit to connect said third node and said first node together, controls said second switching unit to connect said second power storage device and said second node together, and causes said voltage converter to perform voltage conversion between said second power storage device and said power supply device.

3. The power supply system for a vehicle according to claim 2, wherein
said power supply device includes a solar cell mounted on the vehicle.

4. The power supply system for a vehicle according to claim 3, wherein
said control device selects said third mode of operation when
said solar cell can generate electric power and
said second power storage device is in need of charging.

5. The power supply system for a vehicle according to claim 3, wherein
said control device selects said second mode of operation when
said solar cell can generate electric power,
said second power storage device is in no need of charging, and
said first power storage device can be charged.

6. The power supply system for a vehicle according to claim 3, wherein
said control device selects said first mode of operation when said solar cell cannot generate electric power.

7. The power supply system for a vehicle according to claim 1, further comprising a motor (MG1, MG2) receiving electric power from said first power storage device to generate motive power for propelling the vehicle.

8. A vehicle comprising the power supply system for a vehicle according to any one of claims 1 to 7.
